# NEUE EUROPÄISCHE PATENTSCHRIFT

(11) **EP 1 175 454 B2**
(45) Veröffentlichungstag und Bekanntmachung des Hinweises auf die Entscheidung über den Einspruch: **30.03.2011**
(45) Hinweis auf die Patenterteilung: 13.11.2002
(21) Anmeldenummer: 00926868.1
(22) Anmeldetag: 11.04.2000
(51) Int. Cl.: C08G 18/48, C08K 3/00, C08G 18/24

(54) **VERFAHREN ZUR HERSTELLUNG VON POLYURETHANEN**
METHOD FOR THE PRODUCTION OF POLYURETHANES
PROCEDE DE PREPARATION DE POLYURETHANES

(30) Priorität: 20.04.1999 DE 19917897
(43) Veröffentlichungstag der Anmeldung: 30.01.2002
(73) Patentinhaber: BASF SE, 67056 Ludwigshafen (DE)
(72) Erfinder: LORENZ, Reinhard, D-48366 Laer (DE); BAUER, Stephan, D-49179 Ostercappeln (DE); JUNGE, Dieter, D-67227 Frankenthal (DE); BAUM, Eva, D-01987 Schwarzheide (DE); HARRE, Kathrin, D-01109 Dresden (DE); ERBES, Jörg, D-76137 Karlsruhe (DE); OSTROWSKI, Thomas, D-44581 Castrop-Rauxel (DE); GROSCH, Georg, Heinrich, D-67098 Bad Dürkheim (DE)
(86) Internationale Anmeldenummer: PCT/EP2000/003229
(87) Internationale Veröffentlichungsnummer: WO 2000/063270

(56) Entgegenhaltungen:
- EP-A- 0 406 440
- EP-A- 0 553 848
- EP-A- 0 862 947
- EP-A- 0 892 002
- WO-A-93/04103
- WO-A-99/14258
- WO-A-99/48607
- US-A- 3 427 335
- US-A- 4 200 701
- US-A- 4 472 560
- US-A- 5 100 997
- US-A- 5 124 425
- US-A- 5 357 038
- US-A- 5 605 939

## Beschreibung

Polyurethane werden in großen Mengen hergestellt. Ein wesentliches Ausgangsprodukt zur ihrer Herstellung sind Polyetheralkohole. Deren Herstellung erfolgt zumeist durch katalytische Anlagerung von niederen Alkylenoxiden, insbesondere Ethylenoxid und Propylenoxid, an H-funktionelle Starter. Als Katalysatoren werden zumeist basische Metallhydroxide oder Salze verwendet, wobei das Kaliumhydroxid die größte praktische Bedeutung hat.

Bei der Synthese von Polyetherpolyolen mit langen Ketten und Hydroxylzahlen von ca. 26 bis ca. 60 mg KOH/g, wie sie besonders zur Herstellung von Polyurethan-Weichschäumen eingesetzt werden, kommt es bei fortschreitendem Kettenwachstum zu Nebenreaktionen, die zu Störungen im Kettenaufbau führen. Diese Nebenprodukte werden als ungesättigte Bestandteile bezeichnet und führen zu einer Beeinträchtigung der Eigenschaften der resultierenden Polyurethan-Materialien. Insbesondere haben diese ungesättigten Bestandteile, die die OH-Funktionalität 1 aufweisen, folgende Konsequenzen:
- Sie sind aufgrund ihres z.T. sehr niedrigen Molekulargewichtes flüchtig und erhöhen so den Gesamtgehalt an flüchtigen Bestandteilen im Polyetherpolyol und in den daraus hergestellten Polyurethanen, insbesondere Polyurethan-Weichschäumen.
- Sie wirken bei der Herstellung des Polyurethans als Kettenabbrecher, weil sie die Vernetzung des Polyurethans bzw. den Aufbau des Molekulargewichtes des Polyurethans verzögern bzw. verringern.

Es ist daher technisch sehr wünschenswert, die ungesättigten Bestandteile soweit als möglich zu vermeiden.

Ein Weg zur Herstellung von Polyetheralkoholen mit einem geringen Gehalt an ungesättigten Bestandteilen ist die Verwendung von Multimetallcyanidkatalysatoren, zumeist Zinkhexacyanometallaten, als Alkoxylierungskatalysatoren. Es gibt eine große Zahl von Dokumenten, in denen die Herstellung von Polyetheralkoholen mittels derartiger Katalysatoren beschrieben wird. So wird in DD-A-203 735 und DD-A-203 734 die Herstellung von Polyetherpolyolen unter Verwendung von Zinkhexacyanocobaltat beschrieben. Durch Verwendung von Multimetallcyanidkatalysatoren kann der Gehalt an ungesättigten Bestandteilen im Polyetherpolyol auf ca. 0,003 bis 0,009 meq/g abgesenkt werden - bei konventioneller Katalyse mit Kaliumhydroxid findet man etwa 10-fache Mengen (ca. 0,03 bis 0,08 meq/g).

Auch die Herstellung der Zinkhexacyanometallate ist bekannt. Üblicherweise erfolgt die Herstellung dieser Katalysatoren, indem Lösungen von Metallsalzen, wie Zinkchlorid, mit Lösungen von Alkali- oder Erdalkalimetallcyanometallaten, wie Kaliumhexacyanocobaltat, umgesetzt werden. Zur entstehenden Fällungssuspension wird in der Regel sofort nach dem Fällungsvorgang eine wassermischbare, Heteroatome enthaltende Komponente zugegeben. Diese Komponente kann auch bereits in einer oder in beiden Eduktlösungen vorhanden sein. Diese wassermischbare, Heteroatome enthaltende Komponente kann beispielsweise ein Ether, Polyether, Alkohol, Keton oder eine Mischung davon sein. Derartige Verfahren sind beispielsweise in US 3,278,457, US 3,278,458, US 3,278,459, US 3,427,256, US 3,427,334, US 3,404,109, US 3,829,505, US 3,941,849, EP 283,148, EP 385,619, EP 654,302, EP 659,798, EP 665,254, EP 743,093, EP 755,716, EP 862,947, EP 892,002, US 4,843,054, US 4,877,906, US 5,158,922, US 5,426,081, US 5,470,813, US 5,482,908, US 5,498,583, US 5,523,386, US 5,525,565, US 5,545,601, JP 7,308,583, JP 6,248,068, JP 4,351,632 und US-A-5,545,601 beschrieben.

Ein Problem bei der Verwendung von Polyetheralkoholen, die mittels Multimetallcyanidkatalysatoren hergestellt wurden, ist deren im Vergleich zu anderen, mittels Hydroxiden katalysierten Polyetheralkoholen geringere Reaktivität. Um diesen Mangel zu beheben, wird in WO 94/03519 vorgeschlagen, den mittels Multimetallcyanidkatalysatoren hergestellten Polyetheralkoholen nach der Entfernung des Katalysators Alkalimetalloxide und -hydroxide und/oder Erdalkalimetalloxide und -hydroxide in einer Menge von 0,5 bis 10 ppm zuzusetzen.

Es hat sich jedoch gezeigt, daß mittels Multimetallcyanidkatalysatoren hergestellte Polyetheralkohole, denen die in WO 94/03519 beschriebenen Verbindungen zugesetzt wurden, zur-der Herstellung von Polyurethan-Weichschaumstoffen nicht einsetzbar sind. Die so hergestellten Schaumstoffe weisen starke, durch den ganzen Probenkörper gehende Rißbildungen auf. Darüber hinaus wird eine starke Dunkelbraunverfärbung der Schaumstoffmuster beobachtet.

Bei völligem Verzicht auf den Zusatz von Metallverbindungen zu Polyetheralkoholen, die mittels Multimetallcyanidkatalysatoren hergestellt wurden, ist, wie oben ausgeführt, deren Reaktivität unzureichend. Es kommt in vielen Fällen zu Rißbildungen. Erhöht man die Menge an Katalysator, insbesondere die Menge an Zinnkatalysator, so kann die Rißbildung zwar verhindert werden, aber die Schaumstoffe sind zumeist geschlossenzellig. Die Verschäumbarkeit der Polyetherole wird vom Schaumstoffhersteller um so besser beurteilt, wenn die Zugabemenge an Zinnkatalysatoren der A-Komponente, bestehend aus Polyolen, Katalysatoren, Treibmitteln und Hilfsstoffen, eine möglichst große Variabilität aufweist, bei gleichzeitiger ausreichender Offenzelligkeit, ausreichender mechanischer Eigenschaften und homogener Struktur des Schaumstoffes.

Aufgabe der Erfindung war es, die Reaktivität von Polyetheralkoholen, die mittels Multimetallcyanidkatalysatoren hergestellt wurden, zu erhöhen, ohne daß es zu den aufgeführten Nachteilen bei der Herstellung von Polyurethan-Weichschaumstoffen kommt.

Die Aufgabe konnte überraschenderweise gelöst werden, indem die Herstellung der Polyurethan-Weichschaumstoffe in Anwesenheit von Metallsalzen durchgeführt wird, Anwesenheit von Metallsalze durchgeführt wird, und die Zugabe der Salze nach der Herstellung der Polyetheralkohole erfolgt.

Gegenstand der Erfindung ist ein Verfahren zur Herstellung von Polyurethan-Weichschaumstoffen durch Umsetzung von Isocyanaten mit Verbindungen mit mindestens zwei aktiven Wasserstoffatomen, dadurch gekennzeichnet, daß als Verbindungen mit mindestens zwei aktiven Wasserstoffatomen Polyetherole, herstellbar durch Anlagerung von Alkylenoxiden an H-funktionelle Startsubstanzen mittels Multimetallcyanidkatalysatoren, eingesetzt werden, die Herstellung der Polyurethan-Weichschaumstoffe in Anwesenheit von Metallsalzen durchgeführt wird, Anwesenheit von Metallsalzen durchgeführt wird, und die Zugabe der Salze nach der Herstellung der Polyetheralkohole erfolgt.

Gegenstand der Erfindung sind weiterhin Polyurethan-Weichschaumstoffe, herstellbar durch Umsetzung von Isocyanaten mit Verbindungen mit mindestens zwei aktiven Wasserstoffatomen, dadurch gekennzeichnet, daß als Verbindungen mit mindestens zwei aktiven Wasserstoffatomen Polyetherole, herstellbar durch Anlagerung von Alkylenoxiden an H-funktionelle Startsubstanzen mittels Multimetallcyanidkatalysatoren, eingesetzt werden und die Umsetzung in Gegenwart von Metallsalzen durchgeführt wird, wobei die Zugabe der Salze nach der Herstellung der Polyetheralkohole erfolgt.

Als Metallsalze werden solche der allgemeinen Formel M^{(A+)}ₐX^{(B-)}_{b} eingesetzt, wobei
- M^{(A+)}=: K⁺, und
- X^{(B-)}=: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₃²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (CₙH₂ₙ₋₁O₂)⁻, (Cₙ₊₁H₂ₙ₋₂O₄)²⁻
mit n = 1-20
und deren Mischsalze und Mischungen, wobei
A⁺ die Wertigkeit das Kations,
B⁻ die Wertigkeit des Anions,
a und b ganze Zahlen
bedeuten mit der Maßgabe, daß die Elektroneutralität der Verbindung gewährleistet ist.

Besonders bevorzugt sind Kaliumchlorid, Kaliumphosphat und Kaliumacetat.

Die Salze werden vorzugsweise in einer Menge von 0,5 bis 50 ppm, bezogen auf die A-Komponente, eingesetzt. Der Zusatz der Salze erfolgt vorzugsweise zu den Polyetheralkoholen und erfolgt nach der Herstellung der Polyetheralkohole, vor oder insbesondere nach dem Reinigungsschritt der Polyetheralkohole. Um eine optimale Mischung der Salze mit dem Polyetheralkohol zu bewirken, werden diese vorzugsweise als Lösung zugesetzt. Als Lösungsmittel kann Wasser verwendet werden, es ist jedoch auch möglich, die Salze zunächst mit einem Teil des Polyetheralkohols zu Mischen und diese Mischung danach dem Polyetheralkohol zuzusetzen.

In einer besonderen Ausführungsform der Erfindung können die Salze einem Treibmittel, insbesondere Wasser zugesetzt werden. In einer weiteren Ausführungsform der Erfindung können die Salze auch einem Katalysator und oder einem Hilfsstoff zugesetzt werden. In einer weiteren Ausführungsform der Erfindung können die Salze auch auch der Isocyanatkomponente zugesetzt werden.

Erfindungsgemäß können die Metallsalze auch in mehr als in einer Komponente zugesetzt werden.

Die Herstellung der Polyetheralkohole erfolgt, wie ausgeführt, durch katalytische Anlagerung von Alkylenoxiden, insbesondere Ethylenoxid, Propylenoxid, Butylenoxid, Vinyloxiran, Styroloxid oder Mischungen aus mindestens zwei der genannten Alkylenoxide. Besonders vorteilhaft ist der Einsatz der erfindungsgemäßen Katalysatoren bei der Anlagerung von Propylenoxid, Ethylenoxid und deren Gemische.

Als Startsubstanzen kommen, wie ausgeführt, H-funktionelle Verbindungen zum Einsatz. Bevorzugt eingesetzt werden zur Herstellung der erfindungsgemäßen Polyetheralkohole zwei- und/oder dreifunktionelle Alkohole, vorzugsweise Ethylenglykol, Diethylenglykol, Propylenglykol, Dipropylenglykol, Butandiol-1,4, Glycerin, Trimethylolpropan, Pentaerythrit, Wasser sowie beliebige Mischungen aus mindestens zwei der genannten Verbindungen.

Die als Katalysatoren eingesetzten Multimetallcyanidverbindungen haben die allgemeine Formel

M¹ ₐ[M²(CN)_{b}(A)_{c}]_{d} · eL · f H₂O, (I)

wobei
- M¹: ein Metallion, ausgewählt aus der Gruppe, enthaltend Zn²⁺, Fe²⁺, Co³⁺, Ni²⁺, Mn²⁺, Co²⁺, Sn²⁺, Pb²⁺, Mo⁴⁺, Mo⁶⁺, Al³⁺, V⁴⁺, V⁵⁺, Sr²⁺, W⁴⁺, W⁶⁺, Cr²⁺, Cr³⁺, Cd²⁺, Hg2+, Pd²⁺, Pt²⁺, V²⁺, Mg²⁺, Ca²⁺, Ba²⁺, Cu²⁺ und Mischungen daraus,
- M²: ein Metallion, ausgewählt aus der Gruppe, enthaltend Fe²⁺, Fe³⁺, Co²⁺, Co³⁺, Mn²⁺, Mn³⁺, V⁴⁺, V⁵⁺, Cr²⁺, Cr³⁺, Rh³⁺, Ru²⁺, Ir³⁺ bedeuten und M¹ und M² gleich oder verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole Aldehyde, Ketone, Ether, Polyether Ester, Harnstoffe, Amide, Nitrile, und Sulfide
- b, c, und d: so ausgewählt sind, daß die Elektoneutralität der Verbindung gewährleistet ist, und
- e: die Koordinationszahl des Liganden bedeuten,
- f: die Koordinationszahl von Wasser bedeutet,
eingesetzt werden.

Die eingesetzten Katalysatoren können röntgenographisch amorph sein, wie in EP-A-654,302 oder EP-A-743,093 beschrieben. Ferner können die Katalysatoren röntgenographisch kristallin sein mit einem Röntgenbeugungsdiagramm, wie es in EP-A-755,716 beschrieben wird.

Die Katalysatoren können entweder ausgehend von den Alkalioder Erdalkalicyanometallaten hergestellt werden, wie es in EP-A-555,053 beschrieben, oder aus den Cyanometallatsäuren, wie in EP-A-862,947, beschrieben.

Die Katalysatoren können als Pulver oder als Pasten eingesetzt werden. Die Verwendung von Pasten ist in WO 97/26,080 beschrieben.

Ferner können Katalysatoren eingesetzt werden, bei denen die Multimetallcyanidverbindungen auf inerte organische und/oder anorganische Träger aufgebracht, in diese eingebracht oder zu Katalysator-haltigen Formkörpern verformt werden.

Die Anlagerung der Alkylenoxide erfolgt bei den üblichen Bedingungen, bei Temperaturen im Bereich von 60 bis 180°C, bevorzugt zwischen 90 bis 140°C, insbesondere zwischen 100 bis 130°C und Drücken im Bereich von 0 bis 15 bar, bevorzugt im Bereich von 0 bis 10 bar und insbesondere im Bereich von 0 bis 5 bar. Die Starter/DMC-Mischung vor Beginn der Alkoxylierung kann gemäß der Lehre von WO 98/52,689 durch Strippen vorbehandelt werden.

Nach Beendigung der Anlagerung der Alkylenoxide wird der Polyetheralkohol nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und oder anderen Methoden der Desodorierung. Falls erforderlich, kann auch eine Filtration erfolgen.

Der Katalysator kann desaktiviert und/oder aus dem Polyol abgetrennt werden. Üblicherweise wird der Katalysator; gegebenenfalls unter Verwendung von Filtrierhilfsmitteln, abfiltriert und oder abzentrifugiert werden.

Wie ausgeführt, werden die erfindungsgemäßen Polyetheralkohole vorzugsweise mit Polyisocyanaten zu Polyurethanen, bevorzugt zu Polyurethan-Schaumstoffen und thermoplastischen Polyurethanen, insbesondere zu Polyurethan-Weichschaumstoffen, umgesetzt. Dabei können die erfindungsgemäßen Polyetheralkohole einzeln oder im Gemisch mit anderen Verbindungen mit mindestens zwei aktiven Wasserstoffatomen eingesetzt.

Als Polyisocyanate kommen hierbei alle Isocyanate mit zwei oder mehreren Isocyanatgruppen im Molekül zum Einsatz. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI) verwendet werden. Es ist auch möglich, Isocyanate einzusetzen, die durch den Einbau von Urethan-, Uretdion-, Isocyanurat-, Allophanat-, Uretonimin- und anderen Gruppen modifiziert wurden, sogenannte modifizierte Isocyanate.

Als Verbindungen mit mindestens zwei mit Isocyanatgruppen reaktiven Gruppen, die im Gemisch mit den erfindungsgemäßen Polyetheralkoholen eingesetzt werden, können Amine, Mercaptane, vorzugsweise jedoch Polyole verwendet werden. Unter den Polyolen haben die Polyetherpolyole und die Polyesterpolyole die größte technische Bedeutung. Die zur Herstellung von Polyurethanen eingesetzten Polyetherpolyole werden zumeist durch basisch katalysierte Anlagerung von Alkylenoxiden, insbesondere Ethylenoxid und/oder Propylenoxid, an H-funktionelle Startsubstanzen hergestellt. Polyesterpolyole werden zumeist durch Veresterung von mehrfunktionellen Carbonsäuren mit mehrfunktionellen Alkoholen hergestellt.

Zu den Verbindungen mit mindestens zwei mit Isocyanatgruppen reaktiven Gruppen gehören auch die Kettenverlängerer und/oder Vernetzer, die gegebenenfalls mit eingesetzt werden können. Dabei handelt es sich um mindestens zweifunktionelle Amine und/oder Alkohole mit Molekulargewichten im Bereich von 60 bis 400.

Als Treibmittel wird zumeist Wasser und bei der Reaktionstemperatur der Urethanreaktion gasförmige, gegenüber den Ausgangsstoffen der Polyurethane inerte Verbindungen, sogenannte physikalisch wirkende Treibmittel, sowie Gemische daraus eingesetzt. Als physikalisch wirkende Treibmittel werden Kohlenwasserstoffe mit 2 bis 6 Kohlenstoffatomen, halogenierte Kohlenwasserstoffe mit 2 bis 6 Kohlenstoffatomen, Ketone, Acetale, Ether, Inertgase wie Kohlendioxid oder Edelgase eingesetzt.

Als Katalysatoren werden insbesondere Aminverbindungen und/oder Metallverbindungen, insbesondere Schwermetallsalze und/oder metallorganische Verbindungen, eingesetzt. Insbesondere werden als Katalysatoren bekannte tertiäre Amine und/oder mit organische Metallverbindungen verwendet. Als organische Metallverbindungen kommen z.B. Zinnverbindungen in Frage, wie beispielsweise Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Als für diesen Zweck übliche organische Amine seien beispielhaft genannt: Triethylamin, 1,4-Diazabicyclo-[2,2,2]-octan, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethyl-ethanolamin, Tetramethylhexamethylendiamin, Dimethylamino-N-methyl-ethanolamin, N-Methylimidazol, N-Formyl-N,N'-dimethylbutylendiamin, N-Dimethylaminoethylmorpholin, 3,3'-Bis-dimethylamino-di-n-propylamin und/oder 2,2'-Dipiparazin-diisopropylether, Diazabicyclo-(2,2,2)-octan Dimethylpiparazin, N,N'-Bis-(3-aminopropyl)ethylendiamin und/oder Tris-(N,N-dimethylaminopropyl)-shexahydrotriazin, 4-Chlor-2,5-dimethyl-1-(N-methylaminoethyl)-imidazol, 2-Aminopropyl-4,5-dimethoxy-1-methylimidazol, 1-Aminopropyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol, bevorzugt 1,4-Diazabicyclo-[2,2,2]-octan und/oder Imidazole, besonders bevorzugt 1-(3-Aminopropyl)imidazol, 1-(3-Aminopropyl)-2-methylimidazol und/oder 1,4-Diazabicyclo-[2,2,2]-octan. Die beschriebenen Katalysatoren können einzeln oder in Form von Mischungen eingesetzt werden.

Als Hilfsmittel und/oder Zusatzstoffe werden beispielsweise Trennmittel, Flammschutzmittel, Farbstoffe, Füllstoffe und/oder Verstärkungsmittel verwendet.

In der Technik ist es üblich, alle Einsatzstoffe mit Ausnahme der Polyisocyanate zu einer sogenannten Polyolkomponente zu vermischen und diese mit den Polyisocyanaten zum Polyurethan umzusetzen.

Die Herstellung der Polyurethane kann nach dem sogenannten oneshot-Verfahren oder nach dem Prepolymerverfahren erfolgen. Die Polyurethan-Weichschaumstoffe können sowohl Blockschäume als auch Formschäume sein.

Eine Übersicht über die Einsatzstoffe für die Herstellung von Polyurethanen sowie die dazu angewendeten Verfahren findet sich beispielsweise im Kunststoffhandbuch, Band 7 "Polyurethane", Carl-Hanser-Verlag München Wien, 1. Auflage 1966, 2. Auflage 1983 und 3. Auflage 1993.

Überraschenderweise zeigen die in Anwesenheit von Salzen aus den DMC-katalysierten Polyetheralkoholen hergestellten Weichschäume gegenüber solchen, denen keine Zusätze beigefügt wurden, ein deutlich verbessertes Aushärteverhalten ohne Rißbildung.

Polyetheralkohole, denen nach dem in WO 94/03519 beschriebenen Verfahren Hydroxide zugesetzt wurden, können nicht zu Polyurethan-Weichschaumstoffen verarbeitet werden. Der so hergestellte Schaumstoff weist starke, durch den ganzen Probenkörper gehende Rißbildungen auf. Darüber hinaus tritt eine starke Dunkelbraunverfärbung auf.

Demgegenüber können die erfindungsgemäßen Polyetheralkohole zu Polyurethan-Weichschaumstoffen mit einer hohen Offenzelligkeit bzw. hohen Luftdurchlässigkeit und einer störungsfreien Schaumstruktur ohne Rißbildung verarbeitet werden.

Die Erfindung soll an den nachstehenden Beispielen näher erläutert werden.

### Beispiel 1

### Herstellung des Katalysators

7 1 stark saurer Ionenaustauscher, der sich in der Natriumform befindet (Amberlite 252 Na, Fa. Rohm&Haas). werden in eine Austauschersäule (Länge 1m, Volumen 7,7 1) gefüllt. Der Ionenaustauscher wird anschließend in die H-Form überführt, indem 10 %ige Salzsäure mit einer Geschwindigkeit von 2 Bettvolumen pro Stunde 9 h lang über die Austauschersäule gefahren wird, bis der Na-Gehalt im Austrag kleiner 1 ppm beträgt. Anschließend wird der Ionenaustauscher mit Wasser neutral gewaschen.

Der regenerierte Ionenaustauscher wird nun benutzt, um eine im wesentlichen alkalifreie Hexacyanocobaltatsäure (H₃[Co(CN)₆]) herzustellen. Dazu wird eine 0,24 molare Lösung von Kaliumhexacyanocobaltat (K₃(Co(CN)₆]) in Wasser mit einer Geschwindigkeit von einem Bettvolumen pro Stunde über den Austauscher gefahren. Nach 2,5 Bettvolumen wird von der Kaliumhexacyanocobaltat-Lösung auf Wasser gewechselt. Die erhaltenen 2,5 Bettvolumen haben im Mittel einen Gehalt von Hexacyanocobaltatsäure von 4,5 Gew.-% und Alkaligehalte kleiner 1 ppm.

2000 ml einer wässrigen Hexacyanocobaltsäure-Lösung (4,4 Gew.-% H₃[Co(CN)₆], K-Gehalt < 1ppm) werden auf 40°C temperiert und anschließend unter Rübren (Blattrührer, U=500 min⁻¹) mit einer Lösung von 178,8 g Zn(II)-Acetat-Dihydrat in 600 g Wasser versetzt. Anschließend werden zur Suspension 350 g tert.-Butanol gegeben. Die Suspension wird bei 40°C weitere 30 min gerührt. Danach wird der Feststoff abgesaugt und auf dem Filter mit 2000 ml tert.-Butanol gewaschen. Der so behandelte Festkörper wurde bei 50°C 16h im Vakuum getrocknet.

Das Röntgendiffraktogramm des so erhaltenen Doppelmetallcyanids läßt sich monoklin indizieren.

### Beispiel 2

### Herstellung des Polyetheralkohols

In den folgenden Beispiel wurde als Starter ein Oligopropylenglycerin mit einer Hydroxyzahl von 370 mg KOH/g benutzt, das durch eine alkalisch katalysierte Umsetzung von Glycerin mit Propylenoxid bei 105°C erhalten wurde. Die Bestimmung der Hydroxylzahl erfolgte nach ASTM D 2849.

605 g des Oligopropylenglycerin wurden mit 2,14 g des Katalysators aus Beispiel 1 in einem Rührautoklaven unter Stickstoffatmosphäre vermischt. Nach dem Evakuieren des Kessels wurde bei 125°C ein Gemisch aus 20 g Ethylenoxid und 130 g Propylenoxid zudosiert. Das fast sofortige Anspringen der Reaktion wurde erkannt an einem nur kurzzeitigen Druckanstieg auf 2,5 bar, der von einem sofortigen Druckabfall gefolgt war. Nach 10 min lag kein freies Propylenoxid bzw. Ethylenoxid im Reaktor vor. Sodann wurde bei derselben Temperatur ein Gemisch aus 565,5 g Ethylenoxid und 3690 g Propylenoxid so zugefahren, daß ein Druck von 2,6 bar abs. nicht überschritten wurde. Bereits nach 100 min war die Dosierphase beendet, nach weiteren 20 min war, wie an dem Drucksignal erkannt werden konnte, die Abreaktionsphase beendet.

Das so erhaltene Polyetherol wurde einmal filtriert, wobei ein Tiefenfilter verwendet wurde. Das Polyol hatte eine Hydroxylzahl von 48 mg KOH/g, eine Viskosität bei 25°C von 632 mPa·s, einen Gehalt an ungesättigten Bestandteilen von 0,0044 meq/g, einen Zinkgehalt von 23 ppm und einen Cobaltgehalt von 11 ppm.

### Beispiele 3-7

Herstellung der Polyisocyanat-Polyadditionsprodukte
- Polyol A:: Polyetheralkohol nach Beispiel 2
- Polyol B:: 1 g einer 33 %igen wäßrigen Kaliumhydroxid-Lösung wurden mit 100 g Polyol A gemischt.
- Polyol C:: 1 g einer 33%igen wäßrigen Kaliumphosphat-Lösung wurden mit 100 g Polyol A gemischt.
- Lupragen® N201:: 1,4-Diazabicyclo-[2,2,2]-octan (33 %) in Dipropylenglykol (67 %) (BASF Aktiengesellschaft)
- Lupragen® N206:: Bis-(2-Dimethylaminoethyl)ether (70 %) in Dipropylenglykol (30 %) (BASF Aktiengesellschaft)
- Kosmus® 29:: Zinn-II-Salz der Ethylhexansäure (Goldschmidt AG)
- Tegostab® BF 2370:: Silikonstabilisator (Goldschmidt AG)
- Lupranat® T80:: 2,4-/2,6-Toluylendiisocyanatgemisch (BASF Aktiengesellschaft)

Die genannten Ausgangsprodukte wurden in den in Tabelle 1 aufgeführten Mengenverhältnissen zur Umsetzung gebracht.

Alle Komponenten außer dem Isocaynat Lupranat® T80 A wurden zunächst durch intensives Mischen zu einer Polyolkomponente vereinigt. Danach wurde das Lupranat® T80 A unter Rühren hinzugegeben und die Reaktionsmischung in eine offene Form vergossen, worin sie zum Polyurethan-Schaumstoff ausschäumte. Die Kennwerte der erhaltenen Schäume sind in Tabelle 2 aufgeführt.

**Tabelle 1**

| Beispiel | 3 | 4 | 5 | 6 |
|---|---|---|---|---|
| Polyol A [g] | 1000 | 999 | 999 | 999 |
| Polyol B [g] | - | 1 | - | - |
| Polyol C [g] | - | - | 1 | 1 |
| BF 2370 [g] | 10 | 10 | 10 | 10 |
| N201/206 3:1 [g] | 2 | 2 | 2 | 2 |
| K 29 [g] | 3,4 | 3,4 | 3,4 | 3,4 |
| Wasser [g] | 45 | 45 | 45 | 45 |
| T 80 [g] | 487,46 | 487,46 | 487,46 | 487,46 |
| Index | 110 | | | |

**Tabelle 2**

| Beispiel | 3 | 4 | 5 | 6 |
|---|---|---|---|---|
| Startzeit [s] | 11 | - | 10 | 12 |
| Abbindezeit [s] | 75 | - | 80 | 90 |
| Steigzeit [s] | 80 | - | 85 | 95 |
| Steighöhe [mm] | 285 | - | 285 | 270 |
| Steighöhe nach 5 min [mm] | 270 | - | 280 | 265 |
| Luftdurchlässigkeit [mmWS] | 400 | - | 350 | 25 |
| Aussehen des Schaums | Rißbildung | Unbrauchbarer Schaum | Homogen, feinzellig | Homogen, feinzellig |

## Patentansprüche

1. Verfahren zur Herstellung von Polyurethan-Weichschaumstoffen durch Umsetzung mindestens eines Polyisocyanats mit mindestens einer Verbindung mit mindestens zwei mit Isocyanatgruppen reaktiven Wasserstoffatomen, **dadurch gekennzeichnet, daß** als Verbindung mit mindestens zwei aktiven Wasserstoffatomen mindestens ein Polyetheralkohol eingesetzt wird, hergestellt durch Anlagerung von Alkylenoxiden an H-funktionelle Startsubstanzen mittels Multimetallcyanid-Katalyse, und die Umsetzung in Anwesenheit von mindestens einem Metallsalz der allgemeinen Formel
M^{(A+)} ₐX^{(B-)}_{b},
wobei
M K⁺
X ausgewählt ist aus F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₃²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴-, (CₙH₂ₙ₋₁O₂)-, (Cₙ₊₁H₂ₙ₋₂O₄)²- mit n = 1-20 und deren Mischsalze und Mischungen, wobei
A⁺ die Wertigkeit das Kations,
B⁻ die Wertigkeit des Anions,
a und b ganze Zahlen
bedeuten mit der Maßgabe, daß die Elektroneutralität der Verbindung gewährleistet ist, durchgeführt wird, und die Zugabe der Salze nach der Herstellung der Polyetheralkohole erfolgt.

2. Verfahren nach Anspruche 1, **dadurch gekennzeichnet, daß** das Metallsalz in der Verbindung mit mindestens zwei aktiven Wasserstoffatomen gelöst ist.

3. Verfahren nach einem der Ansprüche 1 bis 2, **dadurch gekennzeichnet, daß** das Metallsalz im Polyisocyanat gelöst ist.

4. Polyurethan-Weichschaumstoff, herstellbar nach einem der Ansprüche 1 bis 3.

## Claims

1. A process for producing flexible polyurethane foams by reacting at least one polyisocyanate with at least one compound containing at least two hydrogen atoms which are reactive toward isocyanate groups, wherein the compound containing at least two active hydrogen atoms which is used is at least one polyether alcohol prepared by addition of alkylene oxides onto H-functional initiator substances by means of multimetal cyanide catalysis and the reaction is carried out in the presence of at least one metal salt of the formula
M^{(A+)} ₐX^{(B-)}_{b}, where
M is K⁺,
X is selected from among F⁻, Cl⁻, ClO⁻, ClO₃⁻, ClO₄⁻, Br⁻, I⁻, IO₃⁻, CN⁻, OCN⁻, NO₂⁻, NO₃⁻, HCO₃⁻, CO₃²⁻, S²⁻, SH⁻, HSO₃⁻, S0₃²⁻, HSO₄⁻, SO₄²⁻, S₂O₂²⁻, S₂O₃²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (CₙH₂ₙ₋₁O₂)-, (Cₙ₊₁H₂ₙ₋₂O₄)²⁻ where n = 1-20, and their mixed salts and mixtures, where
A⁺ is the valence of the cation,
B⁻ is the valence of the anion and
a and b are integers,
with the proviso that the compound is electrically neutral and the addition of the salts takes place after the preparation of the polyether alcohols.

2. The process according to claim 1, wherein the metal salt is dissolved in the compound having at least two active hydrogen atoms.

3. The process according to claim 1 or 2, wherein the metal salt is dissolved in the polyisocyanate.

4. A flexible polyurethane foam which can be produced according to any of claims 1 to 3.

## Revendications

1. Procédé pour la production de mousses souples de polyuréthanne par mise en réaction d'au moins un polyisocyanate avec au moins un composé comportant au moins deux atomes d'hydrogène réactifs vis-à-vis de groupes isocyanate, **caractérisé en ce que**, en tant que composé comportant au moins deux atomes d'hydrogène actifs, on utilise au moins un polyéther-alcool préparé par fixation par addition d'oxydes d'alkylènes sur des substances de départ à fonctionnalité hydrogène, à l'aide d'une catalyse faisant appel à un cyanure multimétallique, et on effectue la réaction en présence d'au moins un sel métallique de formule générale
M^{(A+)}ₐX^{(B-)}_{b}
dans laquelle
M représente K⁺,
X est choisi parmi F⁻, Cl⁻, ClO⁻, ClO₃⁻, ClO₄⁻, Br⁻, I⁻, IO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₃²⁻, S₂O₄²⁻, S₂O₅²⁻, S₂O₆²⁻, S₂O₇²⁻, S₂O₈²⁻, H₂PO₂⁻, H₂PO₄⁻, HPO₄², PO₄³⁻, P₂O₇⁴⁻, (CₙH₂ₙ₋₁O₂)-, (Cₙ₊₁H₂ₙ₋₂O₄)²⁻, où n = 1 - 20, et leurs sels mixtes et mélanges,
A⁺ représentant la valence du cation,
B⁻ représentant la valence de l'anion,
a et b représentant des nombres entiers,
étant entendu que le caractère électriquement neutre du composé est assuré, et que l'addition des sels s'effectue après la préparation des polyéther-alcools.

2. Procédé selon la revendication 1, **caractérisé en ce que** le sel métallique est dissous dans le composé comportant au moins deux atomes d'hydrogène actifs.

3. Procédé selon la revendication 1 ou 2, **caractérisé en ce que** le sel métallique est dissous dans le polyisocyanate.

4. Mousse souple de polyuréthanne, pouvant être produite selon l'une quelconque des revendications 1 à 3.
